# EUROPEAN PATENT APPLICATION

(11) **EP 4 342 583 A1**
(43) Date of publication of application: **27.03.2024**
(21) Application number: 22804923.5
(22) Date of filing: 13.05.2022
(51) Int. Cl.: B01J 37/08, B01J 37/02, B01J 35/00, B01J 21/18, C25B 1/04, C25B 11/089, C25B 9/23

(54) **REDUCTION CATALYST FOR WATER ELECTROLYSIS AND PREPARATION METHOD THEREFOR**

(30) Priority: 20.05.2021 KR 20210064669
(71) Applicant: Hanwha Solutions Corporation, Jung-gu Seoul 04541 (KR); Yonsei University, University-Industry Foundation(UIF)., Seoul 03722 (KR)
(72) Inventor: ROH, Chiwoo, Daejeon 34128 (KR); KIM, Hansung, Seoul 04194 (KR); KIM, Gil Ho, Daejeon 34128 (KR); SONG, Kyu Ho, Daejeon 34128 (KR)
(74) Representative: Berggren Oy
(86) International application number: PCT/KR2022/006941
(87) International publication number: WO 2022/245068

(57) **Abstract**

The present invention relates to: a method for preparing a reduction catalyst for water electrolysis using protective coating; a reduction electrode for alkaline water electrolysis comprising a reduction catalyst prepared thereby, and an alkaline water electrolysis system. The method for preparing a reduction catalyst for water electrolysis of the present invention applies a protective coating method and suppresses the growth of alloy particles in a subsequent high-temperature heat treatment step, and, thus, can prepare and provide a catalyst with a high alloying degree. As a result, a non-novel metal alloy catalyst prepared according to the method of the present invention has excellent catalytic characteristics by exhibiting hydrogen evolution reaction (HER) performance similar to that of platinum, which is a noble metal catalyst.

## Description

### [TECHNICAL FIELD]

### CROSS-REFERENCE TO RELATED APPLICATION(S)

This application claims the benefit of Korean Patent Application No. 10-2021-0064669 filed on May 20, 2021 in the Korean Intellectual Property Office, the disclosure of which is incorporated herein by reference in its entirety.

The present invention relates to a reduction catalyst for water electrolysis using protective coating, a preparation method therefor, a reduction electrode for alkaline water electrolysis including a reduction catalyst prepared thereby, and an alkaline water electrolysis system including the same. More particularly, the present invention relates to a method for preparing a reduction catalyst for water electrolysis using polydopamine protective coating, a reduction catalyst prepared thereby, a reduction electrode for alkaline water electrolysis including the same, and an alkaline water electrolysis system including the same.

### [BACKGROUND ART]

Hydrogen energy is attracting attention as an eco-friendly energy alternative to fossil fuels because it is rich in resources and does not emit harmful substances. Alkaline water electrolysis, which is one of the methods for preparing hydrogen, has been proven to be stable and cost-competitive, but it has the drawback of being relatively less efficient compared to other water electrolysis technologies (alkaline water electrolysis -67%, polymer electrolyte membrane water electrolysis -90%, solid oxide water electrolysis ~94%). In addition, for the hydrogen evolution reaction (HER) rate that proceeds at a negative electrode, acidic electrolytes have faster reaction rates and lower overpotential, whereas alkaline electrolytes have HER rates that are 2-3 times lower when compared with acidic electrolytes. Therefore, it can be said that HER catalyst research is important in alkaline water electrolysis.

As electrochemical catalysts for alkaline water electrolysis, it is known that platinum (Pt) and platinum (Pt)-based alloy catalysts exhibit high performance and stability. However, since platinum is an expensive and limited noble metal, it may be the main cause of increasing the price of alkaline water electrolysis systems. Therefore, much research is being conducted to maximize catalytic activity and replace platinum. Catalyst materials that can replace platinum include inexpensive transition metals such as Ni, Fe, Co, Mo, and Sn. Among them, Ni is known to have high electrochemical kinetics and excellent corrosion resistance in alkaline solutions, and because it can be easily alloyed with other metals, research on Ni-based alloy catalysts is being actively advanced.

Ni-based alloy catalysts can increase electrochemical activity through physical structure changes and electronic structure modification through alloying, and various studies on NiCo, NiFe, NiMo, NiCu, Ni₂P, and NiSe are being advanced. Among them, the NiMo alloy catalyst can optimize H_{ads} adsorption and H_{ads} recombination reaction and lead to more hydrogen generation through the synergistic effect of Mo, which has a large hydrogen adsorption energy, and Ni, which has a relatively weak adsorption energy. NiMo alloy can be mainly prepared by two methods: electroplating method and powder method.

When preparing an alloy by electroplating, it has the advantage that the preparation method is simple, but it has the disadvantage that it is difficult to control the NiMo structure and adjust the Mo content. Further, as the Mo content increases during preparation using the electroplating method, pores are generated in the alloy, and during HER operation, hydrogen penetrates into the pores and causes cracks, so there is a disadvantage that the content cannot be alloyed at 50% or more.

On the other hand, when preparing NiMo alloy using the powder method, alloys with various structures and composition ratios can be realized. In addition, the alloying degree can be increased through high-temperature heat treatment, and thus, catalyst stability is better than that of the plating method. However, there is a problem that sintering of the alloy, that is, the growth of alloy particle size occurs during the high-temperature heat treatment mainly used in the powder method, and thus, reduces in the catalyst surface area, which causes a problem that the electrochemical activity decreases.

In order to solve such problems, a technology has been proposed in which a polymer is introduced as a capping material into a platinum-based alloy catalyst to suppress the growth of the platinum alloy catalyst during high-temperature heat treatment. However, since this also uses platinum-based metal, which is an expensive noble metal, improvements thereof are needed.

### [DETAILED DESCRIPTION OF THE INVENTION]

### [Technical Problem]

Therefore, an object of the present invention is to provide a method for preparing a reduction catalyst for water electrolysis that can suppress the growth of particle size and increase the alloying degree during high-temperature heat treatment, and a reduction catalyst for water electrolysis prepared thereby.

Specifically, an object of the present invention is to provide a method for preparing a reduction catalyst for water electrolysis that introduces a protective coating method to suppress the growth of particle size during high-temperature heat treatment, and a reduction catalyst for water electrolysis prepared thereby.

Further specifically, an object of the present invention is to provide a method for preparing a reduction catalyst for water electrolysis that is used in a reduction electrode for water electrolysis using a non-noble metal, and a reduction catalyst for water electrolysis prepared thereby.

In addition, an object of the present invention is to provide a reduction electrode for alkaline water electrolysis and an alkaline water electrolysis system comprising a reduction catalyst for water electrolysis prepared by the above preparation method.

### [Technical Solution]

According to one aspect of the invention, there is provided a method for preparing a reduction catalyst for water electrolysis, the method comprising the steps of: forming a first metal-carbon catalyst precursor in which the first metal is supported on a carbon support; coating the first metal-carbon catalyst precursor with polydopamine (PDA); further supporting a second metal on the coated first metal-carbon catalyst precursor to form a first metal-second metal-carbon precursor; and heat-treating the first metal-second metal-carbon precursor to obtain a reduction catalyst for water electrolysis containing a carbon-supported first metal-second metal alloy, wherein the first metal and the second metal are mutually different transition metals.

According to another aspect of the invention, there is provided a reduction catalyst for water electrolysis, comprising a carbon-supported first metal-second metal alloy, wherein the first metal and the second metal are mutually different transition metals, and wherein a molar ratio of the first metal to the second metal is 7:3 to 3:7.

According to yet another aspect of the invention, there is provided a reduction electrode for alkaline water electrolysis, comprising: a metal current collector; and a catalyst layer formed on the metal current collector and containing a reduction catalyst for water electrolysis prepared by the above-mentioned preparation method.

According to a yet further aspect of the invention, there is provided an alkaline water electrolysis system, comprising: an electrolyte; an oxidation electrode; an ion exchange diaphragm; and a reduction electrode containing the reduction catalyst for water electrolysis prepared by the above-mentioned preparation method.

### [Advantageous Effects]

The method for preparing a reduction catalyst for water electrolysis of the present invention applies a protective coating method and suppresses the growth of alloy particles in a subsequent high-temperature heat treatment step, and, thus, can prepare and provide a catalyst with a high alloying degree. As a result, although the method for preparing a reduction catalyst for water electrolysis of the present invention uses a non-noble metal alloy, it exhibits HER (Hydrogen Evolution Reaction) performance similar to that of platinum, which is a noble metal catalyst, and thus is excellent in catalytic properties.

Due to the excellent physical properties of this reduction catalyst, the reduction catalyst can be very preferably applied to the alkaline water electrolysis reduction electrode.

### [BRIEF DESCRIPTION OF THE DRAWINGS]

Fig. 1 is a schematic diagram illustrating a method for preparing a reduction catalyst for water electrolysis containing a carbon-supported Ni-Mo alloy using PDA protective coating method of one embodiment of the present invention.
Fig. 2 shows transmission electron microscopy (TEM) images of the carbon-supported first metal-second metal alloy precursors before (a) and after (b) heat treatment in the method for preparing a reduction catalyst using PDA protective coating method of one embodiment of the present invention.
Fig. 3 is an X-ray diffraction (XRD) pattern image of a reduction catalyst using PDA protective coating prepared at different heat treatment temperatures of 500, 600, 700, 800, and 900 °C.
Fig. 4 is a comparative graph for evaluating the HER of the reduction catalysts using PDA protective coating prepared at different heat treatment temperatures of 500, 600, 700, 800, and 900 °C.
Fig. 5 is an XRD pattern image of a reduction catalyst using PDA protective coating prepared by heat treatment at 700 °C at different Ni:Mo molar ratios of 1:9, 2:8, 3:7, 4:6, 5:5, and 7:3.
Fig. 6 is a comparative graph for evaluating the HER of a reduction catalyst using PDA protective coating prepared by heat treatment at 700 °C at different Ni:Mo molar ratios of 1:9, 2:8, 3:7, 4:6, 5:5 and 7:3.
Fig. 7 is XRD pattern images of a reduction catalyst (a) prepared by using PDA protective coating at different heat treatment temperatures of 500, 600, and 700 °C, and a reduction catalyst (b) prepared at different heat treatment temperatures of 500, 600, and 700 °C without applying PDA protective coating.
Fig. 8 is a comparative graph for evaluating the HER of a reduction catalyst using PDA protective coating and a reduction catalyst prepared at different heat treatment temperature of 500, 600, and 700 °C without applying PDA protective coating.
Fig. 9 shows TEM images of a reduction catalyst prepared according to the present invention by varying the supported amount of the reduction catalyst to 20 wt.% (a) and 40 wt.% (b).
Fig. 10 is an XRD pattern image of a reduction catalyst prepared according to the present invention by varying the supported amount of the reduction catalyst to 20 wt.% and 40 wt.%.
Fig. 11 is a comparative graph for evaluating the HER of a reduction catalyst prepared according to the present invention by varying the supported amount of the reduction catalyst to 20 wt.% and 40 wt.%.
Fig. 12 is a schematic diagram illustrating a method for preparing a reduction catalyst for water electrolysis containing a carbon-supported Co-Mo alloy using PDA protective coating according to the present invention.
Fig. 13 is an XRD pattern image of a reduction catalyst using PDA protective coating prepared by heat treatment at 700 °C at different Co:Mo molar ratios of 3:7, 5:5, and 7:3.
Fig. 14 is a comparative graph for evaluating the HER of a reduction catalyst using PDA protective coating prepared by heat treatment at 700 °C at different Co:Mo molar ratios of 3:7, 5:5, and 7:3.
Fig. 15 is a schematic diagram illustrating a method for preparing a reduction catalyst containing a carbon-supported Ni-Co alloy using PDA protective coating according to the present invention.
Fig. 16 is an XRD pattern image of a reduction catalyst using PDA protective coating prepared by heat treatment at 700 °C at different Ni:Co molar ratios of 3:7, 5:5, and 7:3.
Fig. 17 is a comparative graph for evaluating the HER of a reduction catalyst using PDA protective coating prepared by heat treatment at 700 °C at different Ni:Co molar ratios of 3:7, 5:5, and 7:3.
Fig. 18 is a comparative graph for evaluating the HER of reduction catalysts for water electrolysis prepared with different alloy combinations (Ni-Mo, Co-Mo and Ni-Co) according to the present invention.

### [DETAILED DESCRIPTION OF THE EMBODIMENTS]

The terms "first," "second," etc. are used herein to described various elements, and these terms are only used to distinguish one constitutional element from the other constitutional elements.

Also, the technical terms used herein is for the purpose of describing exemplary embodiments only and is not intended to limit the scope of the invention. The singular forms "a," "an" and "the" are intended to include plural forms, unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case in which a layer or an element is described as being formed "on" layers or elements, it means that the layer or element is directly formed on the layers or elements, or it means that other layers or elements may be additionally formed between the layers, on a subject, or on a substrate.

While the present invention may be modified in various ways and take on various alternative forms, specific embodiments thereof are shown in the drawings and described in detail below. However, it should be understood that there is no intent to limit the present invention to the particular forms disclosed, but on the contrary, the present invention covers all modifications, equivalents, and alternatives falling within the spirit and scope of the present invention.

Now, a method for preparing a reduction catalyst for water electrolysis, a reduction electrode for alkaline water electrolysis and an alkaline water electrolysis system comprising the same according to the embodiments of the present invention will be described in detail.

According to one embodiment of the present invention, there is provided a method for preparing a reduction catalyst for water electrolysis, the method comprising the steps of: forming a first metal-carbon catalyst precursor in which the first metal is supported on a carbon support; coating the first metal-carbon catalyst precursor with polydopamine (PDA); further supporting a second metal on the coated first metal-carbon catalyst precursor to form a first metal-second metal-carbon precursor; and heat-treating the first metal-second metal-carbon precursor to obtain a reduction catalyst for water electrolysis containing a carbon-supported first metal-second metal alloy.

The present inventors have further studied about a method for preparing an alloy catalyst with an existing core-shell structure having a surface layer made of platinum and a core made of a transition metal that applies polydopamine as a capping material to a carbon-supported platinum catalyst, thereby suppressing the growth of particle size during high-temperature heat treatment process and having a high alloying degree, and designed a method for preparing a reduction catalyst for water electrolysis using non-noble transition metals instead of expensive platinum group metals.

Polydopamine, which is applied as a capping material, is a material with a strong adhesive force and can be coated thinly and uniformly, which suppresses the growth of particle size during heat treatment and facilitates the diffusion of transition metals, thereby making it possible to prepare a reduction catalyst containing an alloy with a high alloying degree. This enables preparation of a reduction catalyst with excellent catalyst activity and durability. In addition, since polydopamine can self-polymerize at room temperature, it has the advantage of being able to be coated without any additional reagents or equipment, and thus, has the advantage of being excellent in preparation process cost and process efficiency.

If the polydopamine coating method proposed in the present invention is applied, the polydopamine coating is carbonized in a subsequent heat treatment step, but the growth of metal particles can be suppressed during heat treatment, and nano-sized metal particles can be supported more uniformly.

In the method for preparing a reduction catalyst for water electrolysis, the first metal and the second metal may be mutually different transition metals. In the present invention, the metal supported on the carbon support consists of two or more types, and the first metal and the second metal are mutually different transition metals and are not a platinum group metal. Specific types of metals are described in more detail below.

In the first metal-second metal alloy contained in the reduction catalyst for water electrolysis obtained from the above preparation method, the molar ratio between the first metal and the second metal may be 7:3 to 3:7. Specifically, the molar ratio between the first metal and the second metal may be 5:5 to 3:7 or 4:6 to 3:7.

The preferable molar ratio of the first metal to the second metal can vary depending on the types of metals to be combined.

In the case of a Ni-Mo alloy where the first metal is nickel (Ni) and the second metal is molybdenum (Mo), the molar ratio of the first metal to the second metal may be preferably 3.5:6.5 or 3.2:6.8, and most preferably 3:7.

In the case of a Co-Mo alloy where the first metal is cobalt (Co) and the second metal is molybdenum (Mo), or a Ni-Co alloy where the first metal is nickel (Ni) and the second metal is cobalt (Co), the molar ratio of the first metal to the second metal may be preferably 4.5:5.5 or 4.8:5.2, and most preferably 5:5.

If the molar ratio of the first metal-the second metal does not meet the above range, there is a problem that the second metal introduced after dopamine coating becomes difficult to be supported on the carbon support, which results in deterioration of HER performance.

The first metal or the second metal can be each independently selected from the group consisting of Ni, Co, Mo, Fe, Sn and Cu. Specifically, a combination of the first metal-second metal may be Ni-Mo, Co-Mo, or Ni-Co.

The supported amount of the first metal and the second metal may be 20 wt% or more with respect to the weight of the carbon support. Specifically, the supported amount of the first metal and the second metal may be 20% to 60 wt% or 20% to 40 wt% with respect to the weight of the carbon support, and preferably the supported amount may be 40 wt%.

The supported amount refers to the ratio of the total amount of the first metal and the second metal supported with respect to the weight of the carbon support. If the loading amount is less than 20 wt%, it is difficult to expect an appropriate reduction effect because the amount of metal nanoparticles that function as a catalyst is small. Therefore, the supported amount is preferably 20 wt% or more. The support ratio refers to the proportion of the first metal or the second metal in the supported amount.

The first metal and the second metal supported on the reduction catalyst for water electrolysis may have a particle size of 10 to 20 nm. Specifically, the particle size may be 10 to 15 nm. Preferably, the particle size may be 10 to 12 nm. The preparation method of the present invention introduces the formation of a polydopamine coating layer, thereby suppressing sintering between metal nanoparticles. Therefore, the first metal and the second metal supported on the reduction catalyst for water electrolysis obtained from the preparation method of the present invention have small particle sizes, and thus can maximize the activated surface area.

The carbon support may be at least one selected from the group consisting of carbon black, carbon nanotube, carbon nanofiber, carbon nanocoil, and carbon nanocage. More specifically, Vulcan XC 72R of carbon black can be used as the carbon support.

In the step of heat-treating the first metal-second metal-carbon precursor to obtain a reduction catalyst for water electrolysis containing a carbon-supported first metal-second metal alloy, the heat treatment temperature may be 600 to 900 °C. Specifically, the heat treatment temperature may be 650 to 900 °C, or 650 to 800 °C, or 650 to 750 °C, or 670 to 730 °C. Preferably, the heat treatment temperature is 700 °C. If the heat treatment temperature is too low, e.g., less than 600°C, there may be a problem that the diffusion of the second metal is not performed properly, the transition metal cannot move into the carbon support, and MnO₂ and MoOs instead of Mo₂C are generated, which may result in deterioration of HER performance. On the other hand, if the heat treatment temperature is too high, diffusion of the second metal is facilitated, but there may be a problem that the metal sinters and becomes coarse and the activated surface area becomes small, resulting in deterioration of HER performance.

In the step of heat-treating the first metal-second metal-carbon precursor to obtain a reduction catalyst for water electrolysis containing a carbon-supported first metal-second metal alloy, a heat treatment atmosphere may be a mixed atmosphere of hydrogen and inert gas.

The mixed atmosphere of hydrogen and inert gas may be one in which hydrogen and inert gas are mixed at a volume ratio of 10:30 to 50. Specifically, hydrogen and inert gas can be mixed at a volume ratio of 10:35 to 45, preferably at a volume ratio of 10:40.

The inert gas may be argon (Ar).

According to another embodiment of the present invention, there can be provided a reduction catalyst for water electrolysis, comprising a carbon-supported first metal-second metal alloy, wherein the first metal and the second metal are mutually different transition metals, and wherein a molar ratio of the first metal to the second metal is 7:3 to 3:7.

The first metal or the second metal included in the reduction catalyst for water electrolysis may be each independently selected from the group consisting of Ni, Co, Mo, Fe, Sn, and Cu.

The supported amount of the first metal or the second metal may be 20 wt% or more with respect to the weight of the carbon.

The carbon-supported first metal-second metal alloy may have a particle size of 10 to 20 nm.

The reduction catalyst for water electrolysis may be obtained from the preparation method described above. Therefore, the molar ratio of the first metal to the second metal, the type of the first metal or the second metal, the amount of support, and the particle size of the alloy in the reduction catalyst for water electrolysis and the effects resulting therefrom are as set forth in the description of the preparation method.

According to another embodiment of the invention, the reduction catalyst for water electrolysis prepared according to the preparation method of the present invention can be used in a reduction electrode for alkaline water electrolysis. More specifically, a reduction electrode for alkaline water electrolysis, comprising: a metal current collector; and a catalyst layer formed on the metal current collector and containing a reduction catalyst for water electrolysis prepared according to the preparation method of the present invention can be provided.

According to yet another embodiment of the invention, an alkaline water electrolysis system, comprising: an electrolyte; an oxidation electrode; an ion exchange diaphragm; and a reduction electrode containing the reduction catalyst for water electrolysis prepared according to according to the preparation method of the present invention can be provided.

Other matters can be implemented with reference to alkaline water electrolysis systems widely known in the art.

Preferred embodiments are presented below to aid understanding of the invention. However, the following examples are for illustrative purpose only and are not intended to limit the scope of the invention thereto.

In the following Examples and Test Examples of the present invention, n wt% NiₓMo_{y}/C-D-m means a reduction catalyst for water electrolysis containing a carbon-supported in which the amount of Ni-Mo alloy supported on the carbon support is n wt%, and the molar ratio of Ni and Mo is x:y, and which is subjected to PDA coating and heat treatment at m°C; n wt% NiₓMo_{y}/C-m means a reduction catalyst for water electrolysis containing a carbon-supported alloy in which the amount of alloy supported on the carbon support is n wt%, and the molar ratio of Ni and Mo is x:y, and which is subjected to heat treatment at m°C without applying PDA coating; n wt% Ni/C means a reduction catalyst for water electrolysis containing a carbon-supported Ni with a Ni supported amount of n wt%; and n wt% Mo₂C means a reduction catalyst for water electrolysis containing a carbon-supported molybdenum with a Mo supported amount of n wt%. The same applies to the above even when the alloy combination is Co-Mo, Ni-Co, etc.

### Example 1: Preparation of a reduction catalyst for water electrolysis containing a carbon-supported Ni-Mo alloy (Ni:Mo molar ratio = 3:7) using PDA protective coating

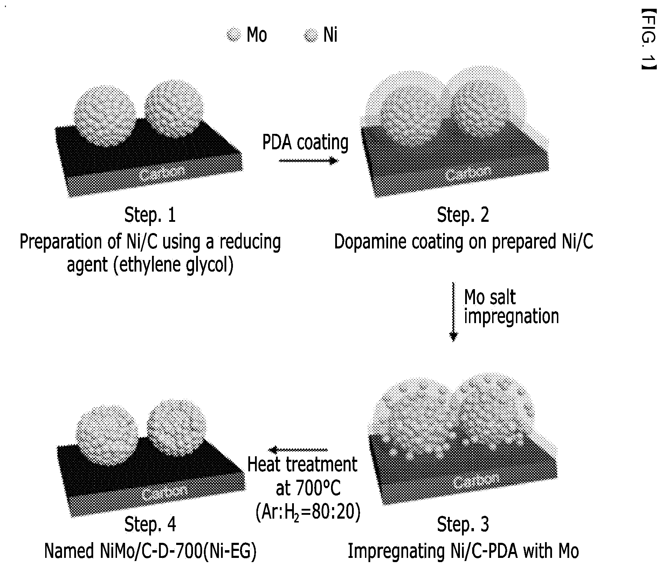

Fig. 1 is a schematic diagram illustrating a method for preparing a reduction catalyst for water electrolysis containing a carbon-supported Ni-Mo alloy using PDA protective coating according to the present invention. Nickel(Ni) was supported as a first metal on a carbon black(C) support, then coated using PDA as a capping agent, then molybdenum(Mo) was supported as a second metal, and a precursor deposition method was applied. After that, a high-temperature heat treatment was performed to prepare a reduction catalyst for water electrolysis containing a carbon-supported Ni-Mo alloy.

Specifically, 22 mg of nickel chloride (NiCl₂·6H₂O), 100 mg of carbon, and 50 mL of ethylene glycol were placed in a 50 mL Teflon reactor for hydrothermal synthesis, and the mixture was subjected to hydrothermal synthesis at 180 °C for 24 hours using a convection oven. After the hydrothermal synthesis was completed, the above solution was filtered using a vacuum filtering device. Then, it was washed three times with deionized water and dried in an oven at 80 °C for 3 hours to remove impurities, thereby obtaining a carbon-supported Ni precursor.

A tris-buffer solution with pH 8.5 was prepared for the synthesis of dopamine. At this time, in order to uniformly synthesize dopamine, the pH must be adjusted accurately, and thus, 121 mg of Tris aminomethane was added to 100 mL of deionized water and stirred for 1 hour. After stirring, 0.2 mL of 0.5M HCl was added at a time using a micropipette.

In the above process, the pH was measured every time 0.2 mL of 0.5 M HCl was added. Once the pH reached 8.5, the addition of HCl was stopped and stirred for 2 hours. 30 mL of the previously prepared tris-buffer solution was adjusted to 25°C, and then 120 mg of the prepared carbon-supported Ni catalyst was added thereto. This solution was stirred for 30 minutes, then a solution of 120 mg of dopamine hydrochloride dissolved in 10 mL of tris-buffer solution was added, and stirred for 24 hours. At this stage, dopamine was coated onto the carbon-supported Ni precursor. The coated sample was recovered using a vacuum filtering device, and washed twice with deionized water. After drying in an oven at 80 °C for 3 hours, the carbon-supported Ni precursor coated with PDA was recovered.

50 mg of sodium molybdate (Na₂MoO₄·2H₂O) and 54 mg of ethylene diamine were added to 20 ml of deionized water and stirred sufficiently. Then, the prepared carbon-supported Ni precursor coated with the PDA was added, and the mixture was refluxed at 80°C for 3 hours. After the reflux was completed, deionized water was evaporated using an evaporator, and the sample was recovered. The prepared carbon-supported Ni-Mo precursor was placed in a furnace and heat-treated at 700 °C for 1 hour in an atmosphere of 80% argon and 20% hydrogen. Thereby, the reduction catalyst for water electrolysis (20 wt% Ni₃MO₇/C-D-700) containing a carbon-supported Ni-Mo alloy with a supported amount of 20 wt% was recovered.

By controlling the amount of nickel chloride and sodium molybdate used, reduction catalysts with different supported amounts and Ni-Mo molar ratios can be prepared.

During the progress of the high-temperature heat treatment, PDA decomposes due to heat, but during the process, the growth of Ni-Mo particles coated with PDA is suppressed. Further, as the heat treatment progresses, the impregnated Mo diffuses into Ni during the decomposition process of PDA, and finally, a reduction catalyst for water electrolysis containing a carbon-supported Ni-Mo alloy can be obtained.

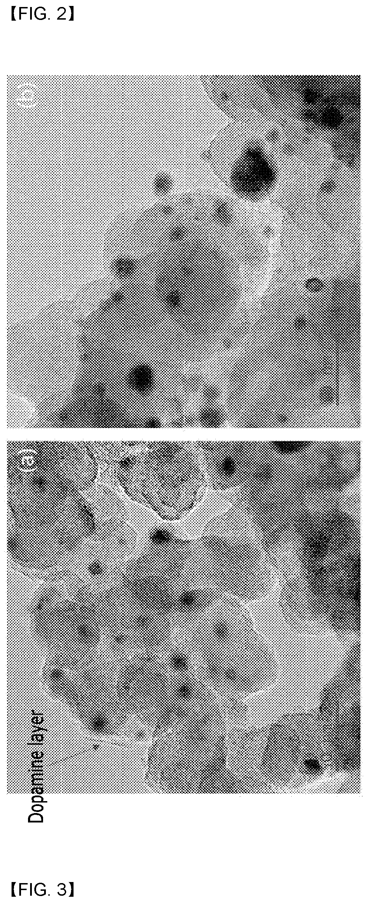

Fig. 2 shows TEM images before and after heat treatment in the method for preparing a reduction catalyst for water electrolysis using PDA protective coating according to the present invention. Fig. 2(a) is an image taken before heat-treating an alloy precursor impregnated with Mo on carbon-supported Ni (Ni/C) coated using PDA as a capping material. Fig. 2(b) is an image taken after heat-treating the carbon-supported alloy precursor at 700 °C.

First, in Fig. 2 (a), it could be confirmed that a PDA layer was formed. In Fig. 2(b), it could be confirmed that the PDA coating layer uniformly wrapping the reduction catalyst for water electrolysis was carbonized through heat treatment. It could be confirmed that despite high-temperature heat treatment due to the protective coating effect, particles of 10 to 20 nm were uniformly supported without the growth of particles.

### Example 2: Preparation of a reduction catalyst for water electrolysis containing a carbon-supported Co-Mo alloy (Co:Mo molar ratio = 5:5) using PDA protective coating

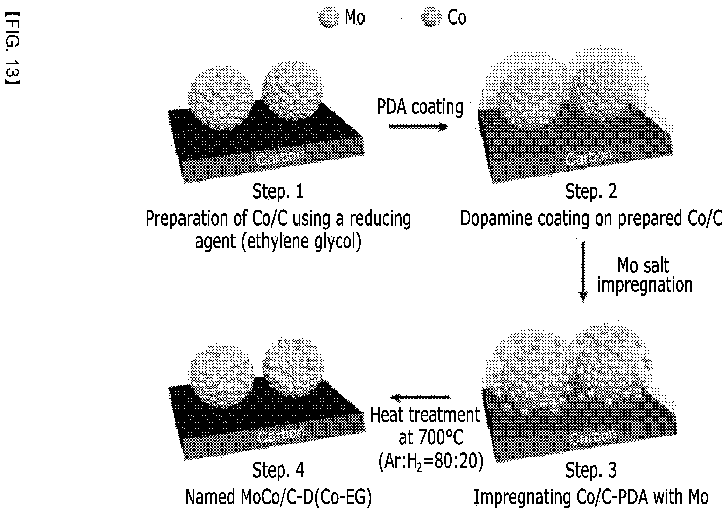

Fig. 12 is a schematic diagram illustrating a method for preparing a reduction catalyst for water electrolysis containing a carbon-supported Co-Mo alloy using PDA protective coating according to the present invention.

Cobalt(Co) was supported as the first metal on a carbon(C) support, then coated with PDA as a capping agent, molybdenum (Mo) was supported as a second metal, and a precursor deposition method was applied. After that, a high-temperature heat treatment was performed to prepare a reduction catalyst for water electrolysis containing a carbon-supported Co-Mo alloy.

Specifically, 47 mg of cobalt nitrate (Co(NO₃)₂·6H₂O), 100 mg of carbon, and 50 mL of ethylene glycol were placed in a 50 mL Teflon reactor for hydrothermal synthesis, and the mixture was subjected to hydrothermal synthesis at 180 °C for 24 hours using a convection oven. After the hydrothermal synthesis was completed, the above solution was filtered using a vacuum filtering device. Then, it was washed three times with deionized water, and dried in an oven at 80 °C for 3 hours to remove impurities, thereby obtaining a carbon-supported Co precursor.

The dopamine coating step proceeded in the same manner as in Example 1. 30 mL of the prepared tris-buffer solution was adjusted to 25°C, and then 120 mg of the prepared carbon-supported Co precursor was added thereto. After stirring this solution for 30 minutes, a solution of 120 mg of dopamine hydrochloride dissolved in 10 mL of tris-buffer solution was added, and stirred for 24 hours. At this stage, dopamine was coated onto the carbon-supported Co precursor. The coated sample was recovered using a vacuum filtering device and washed twice with deionized water. Then, after drying in an oven at 80 °C for 3 hours, the carbon-supported Co precursor coated with PDA was recovered.

40 mg of sodium molybdate (Na₂MoO₄·2H₂O) and 42 mg of ethylene diamine were added to 20 ml of deionized water and stirred sufficiently. Then, the prepared carbon-supported Ni precursor coated with the PDA was added, and the mixture was refluxed at 80°C for 3 hours. After the reflux was completed, deionized water was evaporated using an evaporator, and the sample was recovered. The prepared carbon-supported Ni-Mo precursor was placed in a furnace, and heat-treated at 700 °C for 1 hour in an atmosphere of 80% argon and 20% hydrogen. Thereby, the reduction catalyst for water electrolysis (20 wt% CosMos/C-D-700) containing a carbon-supported Co-Mo alloy with a supported amount of 20 wt% was recovered.

By controlling the amount of cobalt supporting material and sodium molybdate used, reduction catalysts with different supported amounts and Co-Mo molar ratios can be prepared.

Similarly to the reduction catalyst for water electrolysis containing a carbon-supported Ni-Mo alloy, when a reduction catalyst for water electrolysis containing a carbon-supported Co-Mo alloy is also subjected to high-temperature heat treatment, PDA decomposes due to heat, but during the process, the growth of Co-Mo particles coated with PDA is suppressed. Further, as the heat treatment progresses, the impregnated Mo diffuses into Co during the decomposition process of PDA, and finally, a reduction catalyst for water electrolysis containing a carbon-supported Co-Mo alloy can be obtained.

### Example 3: Preparation of a reduction catalyst for water electrolysis containing a carbon-supported Ni-Co alloy (Ni:Co molar ratio = 5:5) using PDA protective coating

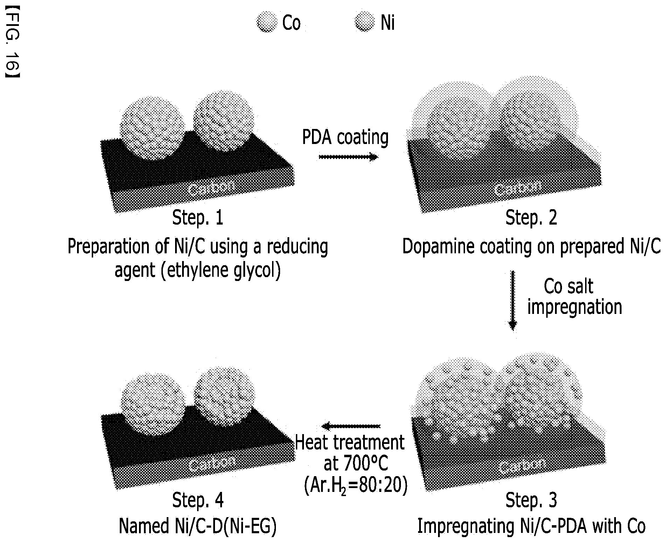

Fig. 15 is a schematic diagram illustrating a method for preparing a reduction catalyst for water electrolysis containing a carbon-supported Ni-Co alloy using PDA protective coating according to the present invention.

Nickel(Ni) was supported as a first metal on a carbon(C) support, then coated using PDA as a capping agent, then cobalt(Co) was supported as a second metal, and a precursor deposition method was applied. After that, a high-temperature heat treatment was performed to prepare a reduction catalyst for water electrolysis containing a carbon-supported Ni-Co alloy.

Specifically, 51 mg of nickel chloride (NiCl₂·6H₂O), 100 mg of carbon, and 50 mL of ethylene glycol were placed in a 50 mL Teflon reactor for hydrothermal synthesis, and the mixture was subjected to hydrothermal synthesis at 180 °C for 24 hours using a convection oven. After the hydrothermal synthesis was completed, the above solution was filtered using a vacuum filtering device. Then, it was washed three times with deionized water, and dried in an oven at 80 °C for 3 hours to remove impurities, thereby obtaining a carbon-supported Ni precursor.

The dopamine coating step proceeded in the same manner as in Example 1. 30 mL of the prepared tris-buffer solution was adjusted to 25°C, and then 120 mg of the prepared carbon-supported Ni precursor was added thereto. After stirring this solution for 30 minutes, a solution of 120 mg of dopamine hydrochloride dissolved in 10 mL of tris-buffer solution was added, and stirred for 24 hours. At this stage, dopamine was coated onto the carbon-supported Ni precursor. The coated sample was recovered using a vacuum filtering device, and washed twice with deionized water. Then, after drying in an oven at 80 °C for 3 hours, the carbon-supported Ni precursor coated with PDA was recovered.

62 mg of cobalt nitrate (Co(NO₃)₂·6H₂O) and 66 mg of ethylene diamine were added to 20 ml of deionized water and stirred sufficiently. Then, the prepared carbon-supported Ni precursor coated with the PDA was added, and the mixture was refluxed at 80°C for 3 hours. After the reflux was completed, deionized water was evaporated using an evaporator, and the sample was recovered. The prepared carbon-supported Ni-Mo precursor was placed in a furnace, and heat-treated at 700 °C for 1 hour in an atmosphere of 80% argon and 20% hydrogen. Thereby, the reduction catalyst for water electrolysis (20 wt% Ni₅Co₅/C-D-700) containing a carbon-supported Ni-Co alloy with a supported amount of 20 wt% was recovered.

By controlling the amount of cobalt supporting material and sodium molybdate used, reduction catalysts with different supported amounts and Ni-Mo molar ratios can be prepared.

Similarly to the reduction catalyst for water electrolysis containing a carbon-supported Ni-Mo alloy, when a reduction catalyst for water electrolysis containing a carbon-supported Ni-Mo alloy is also subjected to a high-temperature heat treatment, PDA decomposes due to heat, but during the process, the growth of Ni-Co particles coated with PDA is suppressed. Further, as the heat treatment progresses, the impregnated Co diffuses into Ni during the decomposition process of PDA, and finally, a reduction catalyst for water electrolysis containing a carbon-supported Ni-Co alloy can be obtained.

### Comparative Example 1: Supporting nickel alone

A carbon-supported Ni catalyst (Ni/C) was prepared through a hydrothermal synthesis process.

### Comparative Example 2: Supporting molybdenum alone

Without performing the hydrothermal synthesis step of supporting Ni on carbon of Example 1, PDA was coated onto the carbon support, impregnated with Mo, and then heat-treated at 700 °C for 1 hour in an atmosphere of 20% hydrogen and 80% argon in the same manner as in Example 1 to prepare a carbon-supported Mo catalyst (Mo₂C).

### Comparative Example 3: PDA coating does not progress

Without performing the PDA coating step of Example 1, Mo was impregnated into the carbon-supported Ni precursor by hydrothermal synthesis, and then heat-treated at 700 °C for 1 hour in an atmosphere of 20% hydrogen and 80% argon in the same manner as in Example 1 to prepare a reduction catalyst for water electrolysis (20 wt% Ni₃Mo₇/C-700) containing a carbon-supported Ni-Mo alloy.

### Comparative Example 4: Preparation of a reduction catalyst for water electrolysis containing a carbon-supported Pt-Ni alloy (Pt:Ni molar ratio = 2:1) using PDA protective coating

Platinum (Pt) was supported as a first metal on a carbon (C) support, then coated using PDA as a capping agent, then nickel (Ni) was supported as a second metal and a precursor deposition method was applied. After that, a high-temperature heat treatment was performed to prepare a reduction catalyst for water electrolysis containing a carbon-supported Pt-Ni alloy.

Specifically, 200 mg of carbon was added to 25 mL of ethylene glycol and subjected to ultrasonic dispersion treatment for 30 minutes. 75 mg of platinum chloride (PtCl₄) was added to the stirred solution, and stirred for 30 minutes. After the stirring was completed, 85 mg of NaOH was added and stirred for 30 minutes to adjust the pH to 6 to 7. At this time, NaOH can contribute to adjusting the pH of ethylene glycol and reducing the particle size of platinum. After NaOH was completely dissolved, it was refluxed at 160 °C for 10 minutes using a microwave. At this time, platinum (Pt) and ruthenium (Ru) ions were reduced and adsorbed on the crystalline carbon surface. After that, the pH was lowered using 0.1M H₂SO₄, and the pH was adjusted to 2-3. After the adjustment was completed, the mixture was further stirred for 24 hours. After the stirring was completed, the above solution was filtered using a vacuum filtering device. Then, it was washed three times with deionized water and dried at 80 °C for 3 hours to remove impurities, thereby obtaining carbon-supported Pt.

The dopamine coating step proceeded in the same manner as in Example 1. 30 mL of the prepared tris-buffer solution was adjusted to 25°C, and then 175 mg of the prepared carbon-supported Pt precursor was added thereto. After stirring this solution for 30 minutes, a solution of 120 mg of dopamine hydrochloride dissolved in 10 mL of tris-buffer solution was added and stirred for 24 hours. At this stage, dopamine was coated onto the carbon-supported Pt precursor. The coated sample was recovered using a vacuum filtering device and washed twice with deionized water. Then, after drying in an oven at 80 °C for 3 hours, the carbon-supported Pt precursor coated with PDA was recovered.

23.4 mg of nickel chloride (NiCl₂·6H₂O) and 24.9 mg of ethylene diamine were added to 20 ml of deionized water and stirred sufficiently. Then, the prepared carbon-supported Pt precursor coated with the PDA was added, and the mixture was refluxed at 80°C for 3 hours. After the reflux was completed, deionized water was evaporated using an evaporator, and the sample was recovered. The prepared carbon-supported Pt-Ni precursor was placed in a furnace and heat-treated at 700 °C for 1 hour in an atmosphere of 80% argon and 20% hydrogen. Thereby, the reduction catalyst for water electrolysis (20 wt% Pt₂Ni/C-D-700) containing a carbon-supported Pt-Ni alloy with a supported amount of 20 wt% at a molar ratio of 2:1 was recovered.

### <Test Example 1> Evaluation of particle size and support ratio depending on heat treatment temperature of a reduction catalyst for water electrolysis containing a carbon-supported Ni-Mo alloy

In this Test Example 1, when a reduction catalyst for water electrolysis containing a carbon-supported Ni-Mo alloy was prepared using PDA protective coating, a test was conducted to evaluate the characteristics of the reduction catalyst depending on the heat treatment temperature. The reduction catalyst for water electrolysis containing a carbon-supported Ni-Mo alloy was prepared in the same manner as in Example 1 described above.

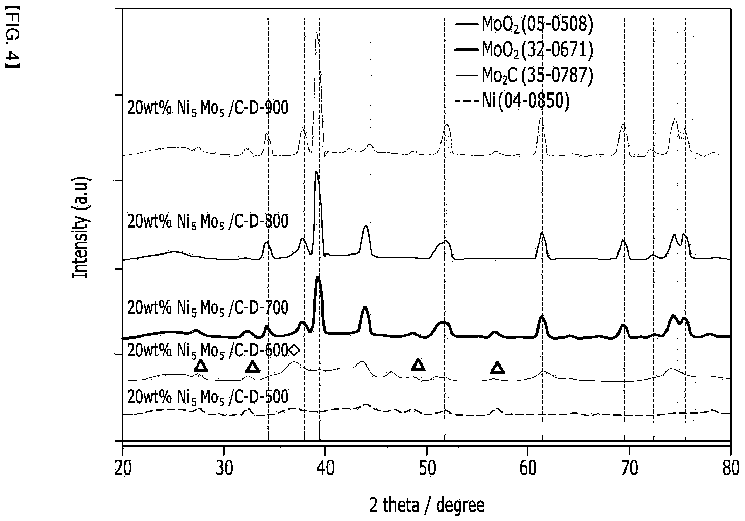

Fig. 3 is an X-ray diffraction (XRD) pattern image of a reduction catalyst for water electrolysis using PDA protective coating prepared at different heat treatment temperatures of 500, 600, 700, 800 and 900 °C. The heat treatment temperature in the precursor deposition method is one of the important factors that determines the alloying degree and particle size of the alloy contained in the reduction catalyst. Generally, as the heat treatment temperature is higher, the alloying degree is higher, which improves the durability and activity of the catalyst. However, the heat treatment temperature rise causes an increase in the particle size of the catalyst and agglomeration of particles, which reduces the catalyst active area.

As shown in Fig. 3, looking at the XRD pattern image, it was found that the Mo₂C peak appears when the heat treatment temperature is 700°C or higher. This means that at high temperatures of 700 °C or higher, Mo₂C is formed by a strong bond between carbon and Mo.

The XRD particle size and support ratio of the reduction catalyst for water electrolysis using PDA protective coating prepared at different heat treatment temperatures of 500, 600, 700, 800, and 900 °C are shown in [Table 1] below.

**[Table 1]**

| Catalyst composition, with or without PDA coating, and heat treatment temperature | Particle size (nm) | Support ratio (wt%) (ICP-AES) | |
|---|---|---|---|
| | | Ni | Mo |
| 20 wt% Ni₅Mo₅/C-D-500 | N/A | 7.48 | 12.26 |
| 20 wt% Ni₅Mo₅/C-D-600 | N/A | 7.37 | 12.31 |
| 20 wt% Ni₅Mo₅/C-D-700 | 12.5 | 7.11 | 10.96 |
| 20 wt% Ni₅Mo₅/C-D-800 | 14.8 | 7.54 | 12.18 |
| 20 wt% Ni₅Mo₅/C-D-900 | 21 | 7.49 | 12.37 |

As shown in [Table 1], as the heat treatment temperature was higher, the particle size of the reduction catalyst for water electrolysis prepared by applying PDA protective coating showed the tendency to increase. This means that the PDA coating layer cannot completely suppress sintering of the particles during high-temperature heat treatment, so that the higher the temperature, the more the size of the particles increases. On the other hand, it was found that the support ratio was similar regardless of the heat treatment temperature. When the heat treatment was performed at 500 °C or 600 °C, the crystals did not grow sufficiently, and therefore, no XRD peak was detected, making it impossible to calculate the particle size by XRD.

### <Test Example 2> Evaluation of HER depending on heat treatment temperature of reduction catalyst for water electrolysis containing a carbon-supported Ni-Mo alloy

In this Test Example 2, a test was conducted to evaluate the HER (hydrogen evolution reaction) depending on the heat treatment temperature when preparing a reduction catalyst for water electrolysis containing a carbon-supported Ni-Mo alloy using PDA protective coating.

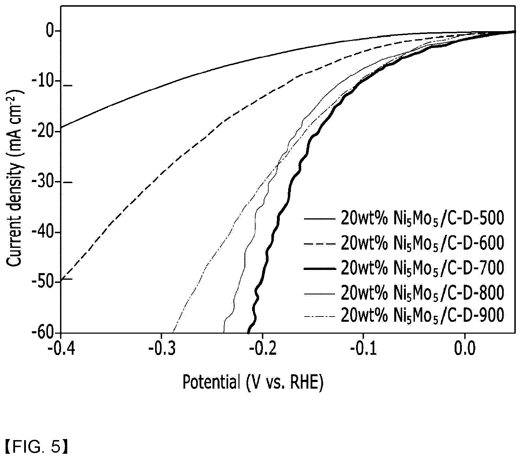

Fig. 4 is a comparative graph in which the HER of the reduction catalysts using PDA protective coating prepared at different heat treatment temperatures of 500, 600, 700, 800, and 900 °C is evaluated through changes in voltage and current density.

To evaluate the HER, a Rotating Disk Electrode (RDE) tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte.

The ink of the reduction catalyst prepared by using PDA protective coating according to the present invention was applied to the RDE tip, dried, then connected to a rotator, and the linear sweep voltammetry (LSV) was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm² are shown in Table 2 below.

**[Table 2]**

| Catalyst composition, with or without PDA coating, and heat treatment temperature | Overpotential @10 mA·cm⁻² (mV) |
|---|---|
| 20 wt% Ni₅Mo₅/C-D-500 | 287.5 |
| 20 wt% Ni₅Mo₅/C-D-600 | 173.1 |
| 20 wt% Ni₅Mo₅/C-D-700 | 104.4 |
| 20 wt% Ni₅Mo₅/C-D-800 | 122.1 |
| 20 wt% Ni₅Mo₅/C-D-900 | 107.1 |

As shown in [Table 2], as a result of the HER measurement, the reduction catalyst (20 wt% NisMos/C-D) prepared by PDA protective coating showed the most excellent HER performance of 104.4mV at @10 mA·cm⁻² when the heat treatment temperature was 700°C. When compared with the XRD pattern image of Fig. 3, it was confirmed that at a temperature of 700 °C or less, Mo mainly exists as MoO₂ and MoOs, and they do not contribute to HER. It was found that when heat treated at 700°C, the Ni peak shifted to an alloy of Ni and Mo. Mo also reacted with carbon to form Mo₂C. Mo₂C is also known to be reactive to HER, but it could be confirmed that if the temperature reaches 800 °C or 900 °C, not only does the particle size grow excessively, but also Mo mainly exists as Mo₂C rather than being alloyed with Ni, which actually reduces HER performance.

### <Test Example 3≥ Evaluation of particle size and support ratio depending on Ni-Mo molar ratio of reduction catalyst for water electrolysis containing a carbon-supported Ni-Mo alloy

In this Test Example 3, a test was conducted to evaluate the properties depending on the Ni:Mo molar ratio when preparing a reduction catalyst for water electrolysis containing a carbon-supported Ni-Mo alloy using PDA protective coating.

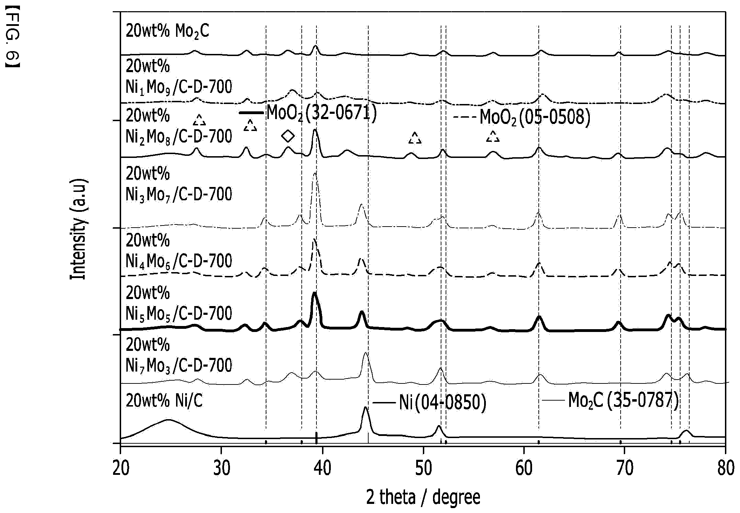

Fig. 5 is an XRD pattern image of a reduction catalyst using PDA protective coating prepared by heat treatment at 700 °C at different Ni:Mo molar ratios of 1:9, 2:8, 3:7, 4:6, 5:5, and 7:3. The XRD results showed that as the Mo content increases, the Ni peak tends to shift toward the negative direction. This means that as the Mo content increases, Mo atoms expand the lattice and shift the Ni peak, thereby increasing the alloying degree of the alloy contained in the reduction catalyst. In addition, as the Mo content increases, the Ni peak shows the tendency to disappear gradually, and when the molar ratio of Ni and Mo is 3:7, 4:6, 5:5 and 7:3, it can be seen that the peak of Ni and Mo₂C forms into a main peak. Particularly, when the molar ratio of Ni and Mo was 3:7, the Mo₂C peak appeared most prominently. However, it was found that when the Mo content was 8 or more, the peak of Mo₂C decreased and the peaks of MoO₂ and MoOs were formed.

The XRD particle size and support ratio of the reduction catalysts using PDA protective coating prepared by heat treatment at 700 °C at different Ni:Mo molar ratios of 1:9, 2:8, 3:7, 4:6, 5:5 and 7:3 are shown in Table 3 below.

**[Table 3]**

| Catalyst composition, with or without PDA coating, and heat treatment temperature | Particle size (nm) | Support ratio (wt%) (ICP-AES) | |
|---|---|---|---|
| | | Ni | Mo |
| 20 wt% Ni/C | 10.2 | 19.8 | - |
| 20 wt% Ni₇Mo₃/C-D-700 | 11.1 | 11.8 | 8.12 |
| 20 wt% Ni₅Mo₅/C-D-700 | 12.5 | 7.11 | 10.96 |
| 20 wt% Ni₄Mo₆/C-D-700 | 12 | 5.73 | 14.01 |
| 20 wt% Ni₃Mo₇/C-D-700 | 12.5 | 4.35 | 15.67 |
| 20 wt% Ni₂Mo₈/C-D-700 | 12.1 | 2.73 | 17.3 |
| 20 wt% Ni₁Mo₉/C-D-700 | N/A | 1.05 | 18.68 |
| 20 wt% Mo₂C | N/A | - | 20.2 |

As shown in [Table 3], the support ratio was adjusted to match with the intended molar ratio. It was also found that the particle size was kept constant at 12 nm regardless of the composition. However, in the case of 20 wt% Ni1Mos/C-D-700 and 20 wt% Mo₂C, the particle size based on XRD could not be calculated because no XRD peaks were detected.

### <Test Example 4> Evaluation of HER depending on Ni:Mo molar ratio of reduction catalyst for water electrolysis containing a carbon-supported Ni-Mo alloy

In this Test Example 4, a test was conducted to evaluate the HER depending on the Ni:Mo molar ratio when preparing a reduction catalyst for water electrolysis containing a carbon-supported Ni-Mo alloy using PDA protective coating.

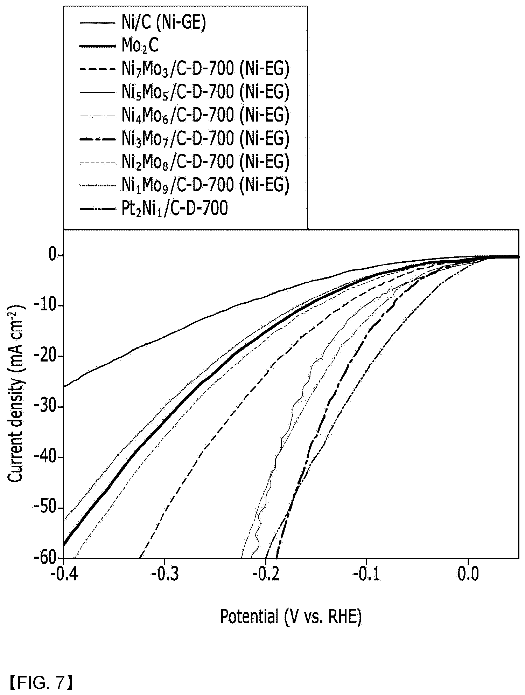

Fig. 6 is a comparative graph in which the HER of a reduction catalyst using PDA protective coating prepared at different Ni:Mo molar ratios of 1:9, 2:8, 3:7, 4:6, 5:5 and 7:3 was evaluated through changes in voltage and current density.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte.

The ink of the reduction catalyst prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm² are shown in Table 4 below.

**[Table 4]**

| Catalyst composition, with or without PDA coating, and heat treatment temperature | Overpotential @10 mA·cm⁻² (mV) |
|---|---|
| 20 wt% Ni/C | 231.8 |
| 20 wt% Ni₇Mo₃/C-D-700 | 123.7 |
| 20 wt% Ni₅Mo₅/C-D-700 | 104.4 |
| 20 wt% Ni₄Mo₆/C-D-700 | 88.1 |
| 20 wt% Ni₃Mo₇/C-D-700 | 75.1 |
| 20 wt% Ni₂Mo₈/C-D-700 | 154.6 |
| 20 wt% Ni₁Mo₉/C-D-700 | 170 |
| 20 wt% Mo₂C | 160.8 |
| 20 wt% Pt2Ni/C-D-700 | 50.3 |

As shown in [Table 4], as a result of HER measurement, when the molar ratio of Ni:Mo was 3:7, the HER performance showed the most excellent HER of 75.1 mV at @10 mA cm⁻². On the other hand, it was found that when the Ni content decreased to less than 3, the HER performance decreased. As previously mentioned in Fig. 5, for the reduction catalyst with a Ni content of less than 3, the peak of Mo₂C decreased and the peaks of MoO₂ and MoOs were formed, which means that Mo₂C makes a larger contribution to the increase in HER performance than MoOs and MoO₂. Furthermore, 20 wt% Pt₂Ni/C-D-700 corresponding to Comparative Example 4 has an overvoltage value of 50.3mV but uses expensive platinum. Therefore, Examples of the present invention showed that even if non-platinum group transition metals are used, the catalyst can be constructed at the same level as when platinum is used.

Particularly, the catalyst preparation method according to Comparative Example 4 removes residual Ni on the surface through additional acid treatment after heat treatment, and forms a Ni core Pt shell structure rather than a PtNi alloy, confirming that there is a difference in structure.

### <Test Example 5> Evaluation of particle size and support ratio of reduction catalyst for water electrolysis containing a carbon-supported Ni-Mo alloy with or without PDA coating

In this Test Example 5, a test was conducted to evaluate the characteristics with or without PDA protective coating when preparing a reduction catalyst for water electrolysis containing a carbon-supported Ni-Mo alloy.

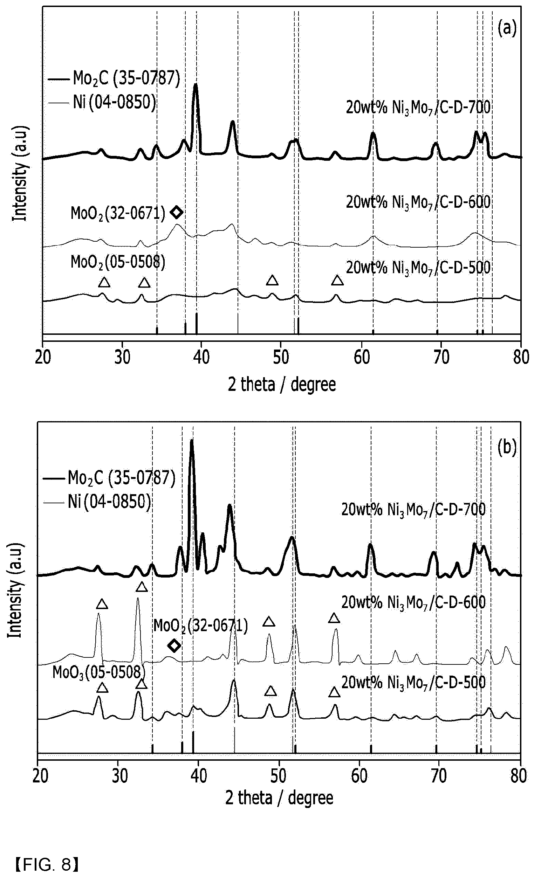

Fig. 7 shows XRD pattern images of a reduction catalyst using PDA protective coating, and a reduction catalyst prepared at different heat treatment temperatures of 500, 600, and 700 °C without applying PDA protective coating. Fig. 7(a) shows a XRD pattern image of a reduction catalyst prepared by applying PDA protective coating, and Fig. 7(b) shows a XRD pattern image of a reduction catalyst prepared without applying PDA protective coating.

Comparing Figs. 7 (a) and (b), when heat treatment temperature was applied at 700 °C, Mo₂C peak was generated with or without PDA protective coating. As a result, it was found that during high-temperature heat treatment at 700°C or higher, carbon and Mo, which is not dopamine, combine to generate Mo₂C.

**[Table 5]**

| Catalyst composition, with or without PDA coating, and heat treatment | Particle size (nm) | Support ratio (wt%) (ICP-AES) | |
|---|---|---|---|
| | | Ni | Mo |
| 20 wt% Ni₃Mo₇/C-D-500 | N/A | 4.15 | 15.33 |
| 20 wt% Ni₃Mo₇/C-D-600 | N/A | 4.08 | 15.26 |
| 20 wt% Ni₃Mo₇/C-D-700 | 12.5 | 4.35 | 15.67 |
| 20 wt% Ni₃Mo₇/C-500 | 10 | 4.21 | 15.5 |
| 20 wt% Ni₃Mo₇/C-600 | 11 | 4.18 | 15.41 |
| 20 wt% Ni₃Mo₇/C-700 | 16.8 | 4.12 | 15.29 |

As shown in [Table 5], the ICP support ratio was constant regardless of whether the PDA protective coating was applied. On the other hand, regarding the particle size, when heat treatment was performed at 700 °C, the particle size of the reduction catalyst prepared by applying PDA protective coating decreased to 12.5 nm, as compared to 16.8 nm, which is the particle size of the reduction catalyst prepared without applying PDA protective coating. This shows that PDA can function as a capping material and suppress the growth of particle size during the heat treatment step. However, in the case of 20 wt% Ni₃Mo₇/C-D-500 and 20 wt% Ni₃Mo₇/C-D-600, the particle size by XRD could not be calculated because no XRD peak was detected.

### <Test Example 6> Evaluation of HER with or without PDA coating of reduction catalyst for water electrolysis containing a carbon-supported Ni-Mo alloy

In this Test Example 6, a test was conducted to evaluate the HER with or without PDA protective coating when preparing a reduction catalyst for water electrolysis containing a carbon-supported Ni-Mo alloy.

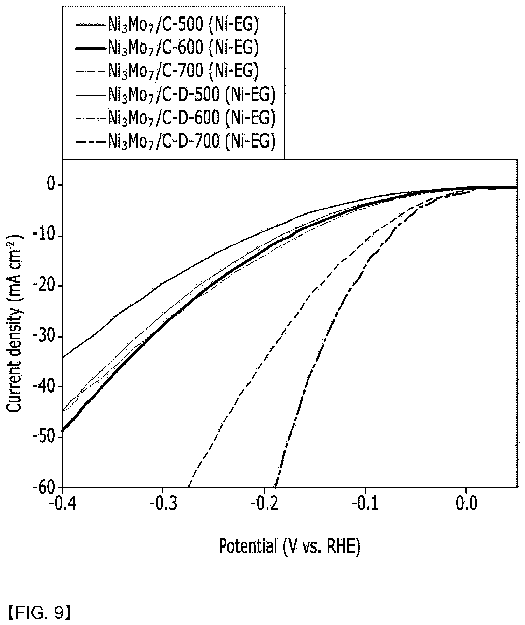

Fig. 8 is a comparative graph in which the HER of a reduction catalyst using PDA protective coating and a reduction catalyst prepared at different heat treatment temperature of 500, 600, and 700 °C without applying PDA protective coating was evaluated through changes in voltage and current density.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte.

The ink of the reduction catalyst prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm².are shown in Table 6 below.

**[Table 6]**

| Catalyst composition, with or without PDA coating, and heat treatment | Overpotential @10 mA·cm⁻² (mV) |
|---|---|
| 20 wt% Ni₃Mo₇/C-D-500 | 188.5 |
| 20 wt% Ni₃Mo₇/C-D-600 | 166.9 |
| 20 wt% Ni₃Mo₇/C-D-700 | 75.1 |
| 20 wt% Ni₃Mo₇/C-500 | 213.3 |
| 20 wt% Ni₃Mo₇/C-600 | 176.2 |
| 20 wt% Ni₃Mo₇/C-700 | 102 |

As shown in [Table 6], as a result of the HER measurement, 20 wt%Ni₃Mo₇/C-D-700 with PDA protective coating showed the most excellent HER performance of 75.1mV at @10 mA cm⁻². On the other hand, the HER of 20 wt% Ni₃Mo₇/C-700, which is a reduction catalyst without a PDA protective coating, was 102 mV at @10 mA·cm⁻², showing a lower HER as compared to the reduction catalyst with a PDA protective coating. Through this, it was found that the particle size of the reduction catalyst prepared with PDA protective coating allows the particles to maintain in a small size even during high-temperature heat treatment, thereby increasing the activated surface area.

### <Test Example 7> Evaluation of particle size and support ratio depending on the supported amount of reduction catalyst for water electrolysis containing a carbon-supported Ni-Mo alloy

In this Test Example 7, a test was conducted to evaluate the characteristics of a reduction catalyst prepared by varying the supported amount to 20 wt% and 40 wt% when preparing a reduction catalyst for water electrolysis containing a carbon-supported Ni-Mo alloy.

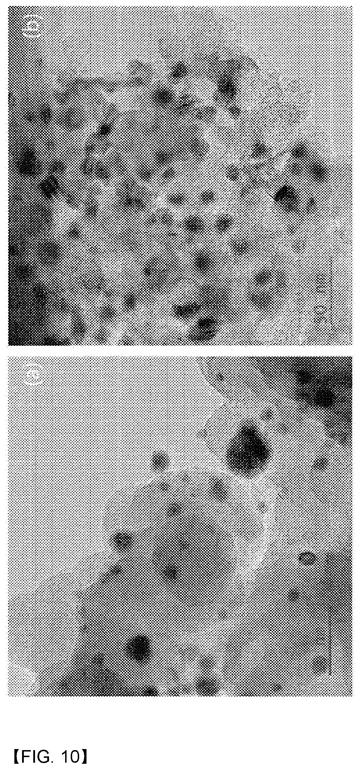

Fig. 9 shows TEM images of a reduction catalyst prepared according to the present invention by varying the supported amount of the reduction catalyst to 20 wt.% and 40 wt.%. Fig. 9(a) is an image taken at high magnification of 20 wt% Ni₃Mo₇/C-D-700, and Fig. 9(b) is an image taken at high magnification of 40 wt% Ni₃Mo₇/C-D-700.

First, when comparing the images of Fig. 9, it could be seen that particles with an average size of 10 to 20 nm were uniformly supported on both carbon supports. Particularly, in Fig. 9(b), it was confirmed that a reduction catalyst was prepared in which Ni-Mo was uniformly supported on the carbon support in a proportion as high as possible.

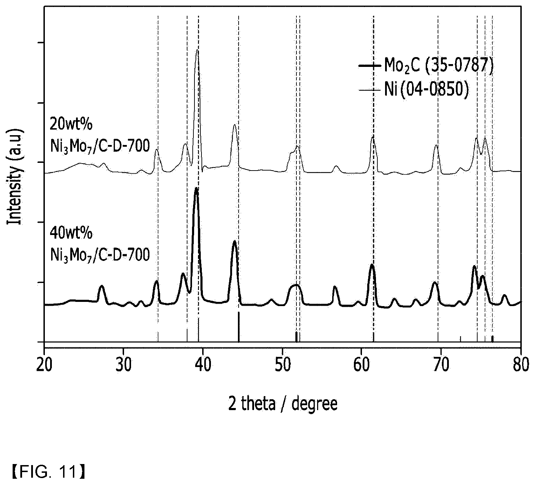

Fig. 10 is an XRD pattern image of a reduction catalyst prepared by varying the supported amount of the reduction catalyst to 20 wt.% and 40 wt.%, applying PDA protective coating and heat-treating it at 700 °C according to the present invention. As shown in Fig. 10, the XRD peak of the reduction catalyst prepared at 40 wt% showed that Ni and Mo₂C form the main peaks, similar to the reduction catalyst prepared at 20 wt%.

**[Table 7]**

| Catalyst composition, | Particle size | Support ratio (wt%) (ICP-AES) | |
|---|---|---|---|
| with or without PDA coating, and heat treatment | (nm) | Ni | Mo |
| 20 wt% Ni₃Mo₇/C-D-700 | 12.5 | 4.35 | 15.67 |
| 40 wt% Ni₃Mo₇/C-D-700 | 11.8 | 8.28 | 31.15 |

As shown in [Table 7], there was no change in particle size even when the amount of supported alloy was doubled. On the other hand, the support ratio was increased by about two times, and the preparation of a reduction catalyst with an increased amount of Ni-Mo supported was successfully completed.

### <Test Example 8> Evaluation of HER depending on the amount of reduction catalyst for water electrolysis containing a carbon-supported Ni-Mo alloy

In this Test Example 8, a test was conducted to compare and evaluate the HER of reduction catalysts prepared with different supported amounts of 20 wt% and 40 wt% when preparing a reduction catalyst for water electrolysis containing a carbon-supported Ni-Mo alloy.

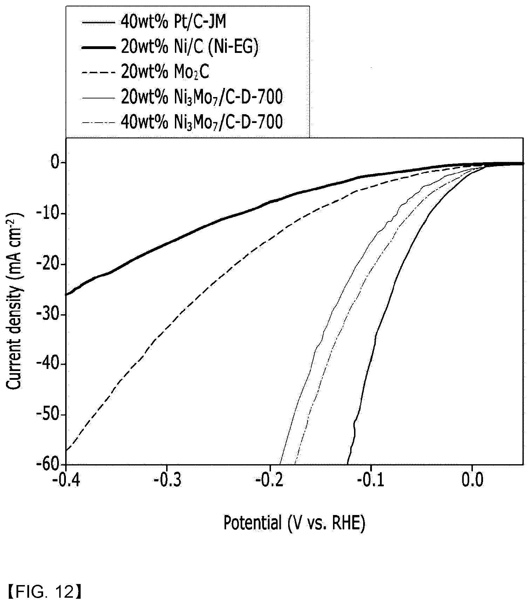

Fig. 11 is a comparative graph in which the HER of a commercially available Pt/C catalyst and a reduction catalyst prepared by varying the support ratio of nickel-supported catalysts or molybdenum-supported catalysts and Ni-Mo to 20 wt% and 40 wt%, applying PDA protective coating and then heat-treating it at 700 °C according to the present invention.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte.

The ink of the reduction catalyst (20 wt% NisMos/C-D-700) prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm² are shown in Table 8 below.

**[Table 8]**

| Catalyst composition, with or without PDA coating, and heat treatment | Overpotential @10 mA·cm⁻² (mV) |
|---|---|
| 40 wt% Pt/C-JM | 42.7 |
| 20 wt% Ni/C | 231.8 |
| 20 wt% Mo₂C | 160.8 |
| 20 wt% Ni₃Mo₇/C-D-700 | 75.1 |
| 40 wt% Ni₃Mo₇/C-D-700 | 62.6 |

As shown in [Table 8], as a result of HER measurement, the HER performance of 40 wt% Ni₃Mo₇/C-D-700 with PDA protective coating showed the most excellent HER performance of 62.6mV at @10 mA cm⁻². This showed a slight increase in performance as compared to 75.1 mV at @10 mA·cm⁻², which is the HER performance of 20 wt% Ni₃Mo₇/C-D-700. As a result, it was found that the HER performance is improved due to the increase in the amount of metal supported by Ni and Mo, which promotes the adsorption and desorption reaction of hydrogen. From the results of this Test Example 8 and the results of Test Examples 2, 4, and 6, it can be seen that the reduction catalyst for water electrolysis (40 wt% Ni₃Mo₇/C-D-700), which is heat treated at 700 °C with a PDA protective coating and supports 40 wt% on carbon at a molar ratio of Ni:Mo = 3:7, has the highest alloying degree and the most excellent HER.

### <Test Example 9> Evaluation of particle size and support ratio depending on Co-Mo molar ratio of reduction catalyst for water electrolysis containing a carbon-supported Co-Mo alloy

In this Test Example 9, a test was conducted to evaluate the characteristics depending on the Co:Mo molar ratio when preparing a reduction catalyst for water electrolysis containing a carbon-supported Co-Mo alloy using PDA protective coating. The method for preparing the reduction catalyst for water electrolysis containing a carbon-supported Co-Mo alloy was in accordance with Example 2.

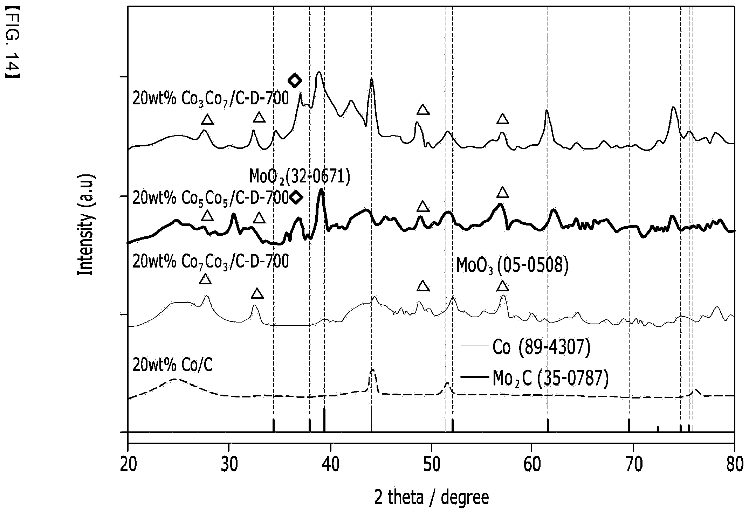

Fig. 13 is an XRD pattern image of a reduction catalyst using PDA protective coating prepared by heat treatment at 700 °C at different Co:Mo molar ratios of 3:7, 5:5, and 7:3.

The XRD results showed that Co, MoOs, MoO₂, and Mo₂C peaks are formed at all composition ratios, and the Mo₂C peak increases as the molar ratio of Mo increases.

The XRD particle size and support ratio of the reduction catalyst using PDA protective coating prepared by heat treatment at 700 °C at different Co:Mo molar ratios of 3:7, 5:5, and 7:3 are shown in [Table 9] below.

**[Table 9]**

| Catalyst composition, with or without PDA coating, and heat treatment | Particle size (nm) | Support ratio (wt%) (ICP-AES) | |
|---|---|---|---|
| | | Co | Mo |
| 20 wt% Co/C | 10.5 | 18.6 | - |
| 20 wt% Co₇Mo₃/C-D-700 | N/A | 11.3 | 8.2 |
| 20 wt% Co₅Mo₅/C-D-700 | N/A | 7.6 | 12.2 |
| 20 wt% Co₃Mo₇/C-D-700 | 11.2 | 4.4 | 16 |

As shown in [Table 9], the support ratio was adjusted to match with the intended molar ratio. In addition, particles were formed with an average particle size of 11 nm, which confirmed that a particle size similar to that of the initial Co/C was formed without particle growth even after high-temperature heat treatment due to the protective coating effect. However, in the case of 20 wt% Co₇Mo₃/C-D-700 and 20 wt% CosMos/C-D-700, the particle size based on XRD could not be calculated because no XRD peaks were detected.

### <Test Example 10> Evaluation of HER depending on Co:Mo molar ratio of reduction catalyst for water electrolysis containing a carbon-supported Co-Mo alloy

In this Test Example 10, a test was conducted to evaluate the HER depending on o the Co:Mo molar ratio when preparing a reduction catalyst for water electrolysis containing a carbon-supported Co-Mo alloy using PDA protective coating.

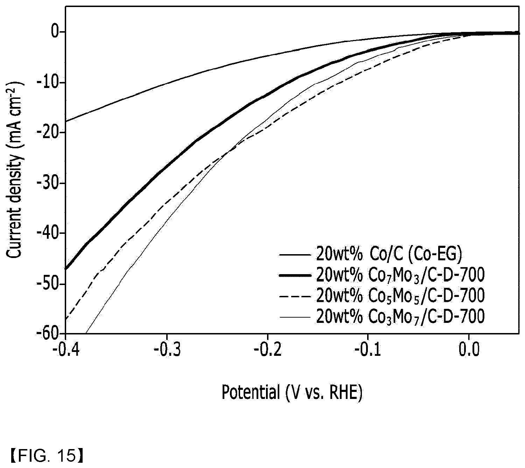

Fig. 14 is a comparative graph for evaluating the HER of a reduction catalyst using PDA protective coating prepared by heat treatment at 700 °C at different Co:Mo molar ratios of 3:7, 5:5, and 7:3.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte. The ink of the reduction catalyst prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm² are shown in Table 9 below,

**[Table 10]**

| Catalyst composition, with or without PDA coating, and heat treatment | Overpotential @10 mA·cm⁻² (mV) |
|---|---|
| 20 wt% Co/C | 300.4 |
| 20 wt% Co₇Mo₃/C-D-700 | 180.4 |
| 20 wt% Co₅Mo₅/C-D-700 | 134.6 |
| 20 wt% Co₃Mo₇/C-D-700 | 152.3 |

As shown in [Table 10], as a result of HER measurement, when the Co:Mo molar ratio was 5:5, the HER performance showed the most excellent HER of 134.6 mV @10 mA cm⁻². Co-Mo non-noble metal alloy also has excellent HER at Mo contents of 5 and 7, where Mo₂C is generated, and in light of this, it was found that Mo₂C makes a large contribution to HER performance. However, in the case of Co-Mo alloy, it was confirmed that although HER performance increased, the effect was not significant compared to Ni-Mo.

### <Test Example 11 > Evaluation of particle size and support ratio depending on Ni:Co molar ratio of reduction catalyst for water electrolysis containing a carbon-supported Ni-Co alloy

In this Test Example 11, a test was conducted to evaluate the characteristics depending on the Ni:Co molar ratio when preparing a catalyst for water electrolysis containing a carbon-supported Ni-Co alloy using PDA protective coating. The method for preparing the reduction catalyst for water electrolysis containing a carbon-supported Ni-Co alloy was in accordance with Example 3 described above.

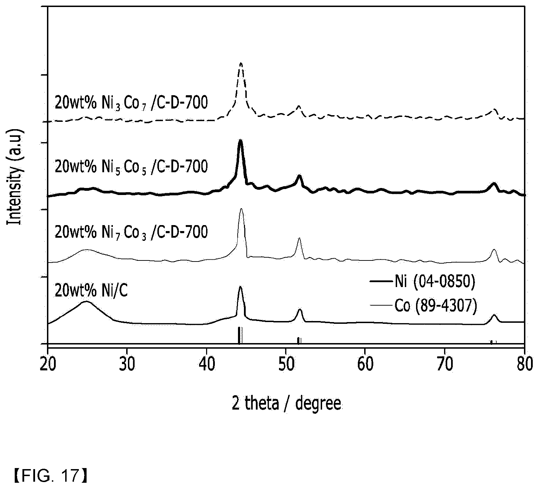

Fig. 16 is an XRD pattern image of a reduction catalyst using PDA protective coating prepared by heat treatment at 700 °C at different Ni:Co molar ratios of 3:7, 5:5, and 7:3.

The XRD results showed that as the amount of Co increased, no alloy was formed in the 2 theta 44 part which is the main peak, and a separated peak was observed.

The XRD particle size and support ratio of reduction catalysts using PDA protective coating prepared by heat treatment at 700 °C at different Ni:Co molar ratios of 3:7, 5:5, and 7:3 are shown below [Table 11] below.

**[Table 11]**

| Catalyst composition, with or without PDA | Particle size (nm) | Support ratio (wt%) (ICP-AES) | |
|---|---|---|---|
| | | Ni | Co |
| coating, and heat treatment | | | |
| 20 wt% Ni/C | 10.2 | 19.8 | - |
| 20 wt% Ni₇Co₃/C-D-700 | 10.8 | 13.8 | 6.0 |
| 20 wt% Ni₅Co₅/C-D-700 | 10.7 | 9.7 | 9.9 |
| 20 wt% Ni₃Co₇/C-D-700 | 11.2 | 6.1 | 13.9 |

As shown in [Table 11], the support ratio was adjusted to match with the intended molar ratio. In addition, particles were formed with an average particle size of 10 to 11 nm, which confirmed that a particle size similar to that of the initial Ni/C is formed without particle growth even after high-temperature heat treatment due to the protective coating effect.

### <Test Example 12> Evaluation of HER depending on Ni:Co molar ratio of reduction catalyst for water electrolysis containing a carbon-supported Ni-Co alloy

In this Test Example 10, a test was conducted to evaluate the HER depending on the Ni:Co molar ratio when preparing a reduction catalyst for water electrolysis containing a carbon-supported Ni-Co alloy using PDA protective coating.

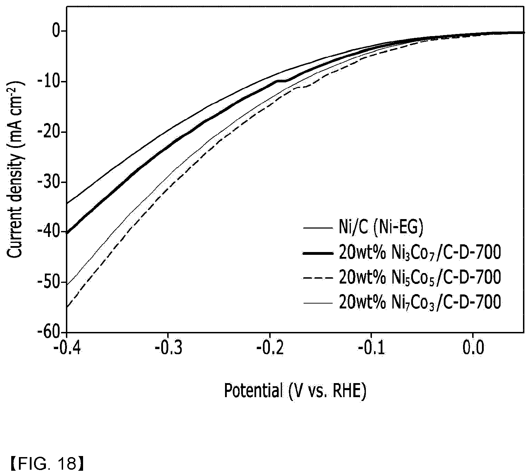

Fig. 17 is a comparative graph for evaluating the HER of a reduction catalyst using PDA protective coating prepared by heat treatment at 700 °C at different Ni:Co molar ratios of 3:7, 5:5, and 7:3.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte. The ink of the reduction catalyst prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm² are shown in Table 12 below,

**[Table 12]**

| Catalyst composition, with or without PDA coating, and heat treatment | Overpotential @10 mA·cm⁻² (mV) |
|---|---|
| 20 wt% Ni/C | 231.8 |
| 20 wt% Ni₇Co₃/C-D-700 | 194.8 |
| 20 wt% Ni₅Co₅/C-D-700 | 159.4 |
| 20 wt% Ni₃Co₇/C-D-700 | 174.7 |

As shown in [Table 12], as a result of HER measurement, when the Co content was 5, the HER performance showed the most excellent HER of 159.4 mV at @10 mA cm⁻². Co-Mo non-noble metal alloy increased in performance compared to Ni/C due to the alloying effect, but the effect was not as large as that of Ni-Mo.

### <Test Example 13> Comparative evaluation of HER of reduction catalysts for water electrolysis containing a carbon-supported Ni-Mo, Co-Mo, or Ni-Co alloy

In this Test Example 13, a test was conducted to compare and evaluate the HER of the prepared reduction catalyst for water electrolysis containing a carbon-supported Ni-Mo, Co-Mo, or Ni-Co alloy with the most excellent composition.

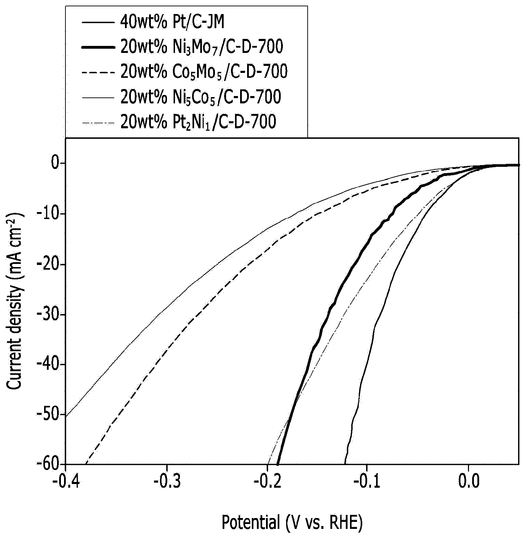

Fig. 18 is a comparative graph in which the HER of a commercially available Pt/C catalyst and a reduction catalyst for water electrolysis containing a carbon-supported Ni-Mo, Co-Mo or Ni-Co alloy having the most excellent composition prepared by applying PDA protective coating and then heat-treating it at 700 °C according to the present invention.

To evaluate the HER, a RDE tip (area: 0.196 cm²) was used as a working electrode in a three-electrode system. The ink to be applied on the RDE tip was prepared to have a density of 350 *µ*g·cm⁻² based on metal. The three-electrode system was composed of Hg/HgO as a reference electrode, platinum (Pt) wire as a counter electrode, and 1M KOH as an electrolyte. The ink of the reduction catalyst prepared by using PDA protective coating according to the present invention was applied to the RDE tip, dried, then connected to a rotator, and the LSV was measured under the conditions of 1600 RPM and a scan rate of 10mV·s⁻¹ to evaluate the HER. During the LSV measurement, the LSV measurement was interrupted when the current density reached -60 mA·cm⁻² or the voltage reached -0.4 V.

Specifically, the results of measuring the overpotential (mV) at a current density of 10 mA/cm².are shown in Table 13 below

**[Table 13]**

| Catalyst composition, with or without PDA coating, and | Overpotential |
|---|---|
| heat treatment | @10 mA·cm⁻² (mV) |
| 20 wt% Ni/C | 231.8 |
| 20 wt% Ni₃Mo₇/C-D-700 | 75.1 |
| 20 wt% Co₅Mo₅/C-D-700 | 134.6 |
| 20 wt% Ni₅Co₅/C-D-700 | 159.4 |
| 20 wt% Pt₂Ni/C-D-700 | 50.3 |

As shown in [Table 13], as a result of the HER measurement, the HER performance of the reduction catalyst for water electrolysis containing a carbon-supported Ni-Mo alloy showed the most excellent HER of 75.1 mV at @10 mA·cm⁻². It was found that when Ni and Co having high hydrogen adsorption energy are alloyed with Mo having a relatively weak hydrogen adsorption energy, it has a structure that facilitates H_{ads} desorption, and therefore promotes H_{ads} recombination reaction and is excellent in hydrogen generation effect. On the other hand, when alloying Ni and Co having high hydrogen adsorption energy, the effect of increasing HER performance is not large. In addition, the overvoltage value of 20 wt% Pt₂Ni/C-D-700 corresponding to Comparative Example 4 is as discussed in Table 4. Totally considering the above results, it was confirmed that a non-noble metal alloy with a structure that facilitates hydrogen adsorption and desorption reactions is suitable for use as a reduction catalyst for water electrolysis. In addition, when Mo₂C is formed, HER performance is excellent, and in light of this, it was found that alloys with a high Mo₂C content due to hydrogen desorption reaction makes a large contribution to HER performance.

From the results of Test Example 13, it was found that in the reduction catalysts for water electrolysis containing a carbon-supported Ni-Mo, Co-Mo and Ni-Co alloys, a reduction catalyst (20 wt% Ni₃Mo₇/C-D-700) applying with PDA protective coating, heat-treating it at 700 °C and supporting 20 wt% on carbon with Ni:Mo=3:7 molar ratio has the most excellent HER among the prepared reduction catalysts for water electrolysis.

## Claims

1. A method for preparing a reduction catalyst for water electrolysis, the method comprising the steps of:
forming a first metal-carbon catalyst precursor in which the first metal is supported on a carbon support;
coating the first metal-carbon catalyst precursor with polydopamine (PDA);
further supporting a second metal on the coated first metal-carbon catalyst precursor to form a first metal-second metal-carbon precursor; and
heat-treating the first metal-second metal-carbon precursor to obtain a reduction catalyst for water electrolysis containing a carbon-supported first metal-second metal alloy,
wherein the first metal and the second metal are mutually different transition metals.

2. The method for preparing a reduction catalyst for water electrolysis according to claim 1, wherein:
the molar ratio of the first metal to the second metal in the first metal-second metal alloy contained in the reduction catalyst for water electrolysis is 7:3 to 3:7.

3. The method for preparing a reduction catalyst for water electrolysis according to claim 1, wherein:
the first metal or the second metal is each independently selected from the group consisting of Ni, Co, Mo, Fe, Sn, and Cu.

4. The method for preparing a reduction catalyst for water electrolysis according to claim 1, wherein:
a supported amount of the first metal or the second metal is 20 wt% or more with respect to the weight of the carbon support.

5. The method for preparing a reduction catalyst for water electrolysis according to claim 1, wherein:
the carbon support is at least one selected from the group consisting of carbon black, carbon nanotube, carbon nanofiber, carbon nanocoil, and carbon nanocage.

6. The method for preparing a reduction catalyst for water electrolysis according to claim 1, wherein:
in the heat-treating the first metal-second metal-carbon precursor to obtain a reduction catalyst for water electrolysis containing a carbon-supported first metal-second metal alloy,
the heat treatment temperature is 600 to 900 °C.

7. The method for preparing a reduction catalyst for water electrolysis according to claim 1, wherein:
in the heat-treating the first metal-second metal-carbon precursor to obtain a reduction catalyst for water electrolysis containing a carbon-supported first metal-second metal alloy,
a heat treatment atmosphere is a mixed atmosphere of hydrogen and inert gas.

8. The method for preparing a reduction catalyst for water electrolysis according to claim 7, wherein:
the mixed atmosphere of hydrogen and inert gas is one in which hydrogen and inert gas are mixed at a volume ratio of 10:30 to 50.

9. The method for preparing a reduction catalyst for water electrolysis according to claim 7, wherein:
the inert gas is argon (Ar).

10. A reduction catalyst for water electrolysis, comprising a carbon-supported first metal-second metal alloy,
wherein the first metal and the second metal are mutually different transition metals, and
wherein a molar ratio of the first metal to the second metal is 7:3 to 3:7.

11. The reduction catalyst for water electrolysis according to claim 10, wherein:
the first metal or the second metal is each independently selected from the group consisting of Ni, Co, Mo, Fe, Sn, and Cu.

12. The reduction catalyst for water electrolysis according to claim 10, wherein:
a supported amount of the first metal or the second metal is 20 wt% or more with respect to the weight of the carbon.

13. The reduction catalyst for water electrolysis according to claim 10, wherein:
the carbon-supported first metal-second metal alloy has a particle size of 10 to 20 nm.

14. A reduction electrode for alkaline water electrolysis, comprising:
a metal current collector; and
a catalyst layer formed on the metal current collector and containing a reduction catalyst for water electrolysis prepared according to the preparation method of claim 1.

15. An alkaline water electrolysis system, comprising:
an electrolyte;
an oxidation electrode;
an ion exchange diaphragm; and
a reduction electrode containing the reduction catalyst for water electrolysis prepared according to claim 1.
